# EUROPÄISCHE PATENTSCHRIFT

(11) **EP 0 523 521 B1**
(45) Veröffentlichungstag und Bekanntmachung des Hinweises auf die Patenterteilung: **04.11.1998**
(21) Anmeldenummer: 92111536.6
(22) Anmeldetag: 08.07.1992
(51) Int. Cl.: G01N 35/02, G01N 21/76

(54) **Strahlungsmessgerät, insbesondere zur Lumineszenzmessung**
Radiation measuring apparatus, in particular for measuring the luminescence
Appareil de mesure de radiations, en particulier pour la mesure de la luminescence

(30) Priorität: 18.07.1991 DE 4123817
(43) Veröffentlichungstag der Anmeldung: 20.01.1993
(73) Patentinhaber: Laboratorium Prof. Dr. Rudolf Berthold GmbH & Co., 75323 Bad Wildbad (DE)
(72) Erfinder: Berthold, Fritz, Dr., W-7530 Pforzheim (DE); Lohr, Willy, W-7547 Wildbad (DE)
(74) Vertreter: Frank, Gerhard, Dipl.-Phys.

(56) Entgegenhaltungen:
- EP-A- 0 025 350
- EP-A- 0 181 060
- EP-A- 0 273 671
- EP-A- 0 329 120
- US-A- 4 004 150
- US-A- 4 772 453

## Beschreibung

Die Erfindung betrifft ein Strahlungsmeßgerät nach dem Oberbegriff des Patentanspruches 1.

Aus der US-PS 4,004,150 ist ein derartiges Strahlungsmeßgerät bekannt; es handelt sich hierbei um ein Densitometer, bei dem die Information die Absorption einer Probe darstellt, wenn diese von einem Lichtstrahl bestimmter Stärke durchstrahlt wird. Hierbei werden kollimierte Lichtstrahlen, beispielsweise Laserstrahlen, eingesetzt, wobei hier infolge der Stärke der Strahlung einerseits als auch infolge der Kollimierung dieser Strahlen eventuelles Streulicht aus der Umgebung keine störenden Effekte hervorruft, also kein "cross-talk" von Bedeutung ist.

Bei dieser vorbekannten Anordnung ist zur Abtastung einer Probenplatte mit matrixartig angeordneten Probengefäßen (sogenannte Microplatte) vorgesehen, daß eine Blendenanordnung aus einer Reihe solcher Probenöffnungen jeweils nur ein Probengefäß auswählt, das von der Lichtquelle durchstrahlt wird. Durch horizontale Verschiebung der Probenplatte wird dann jeweils zur nächsten Reihe der Probengefäße gewechselt und durch Einsatz der Blendeneinrichtung aus dieser Reihe jeweils ein individuelles Probengefäß zur Messung ausgewählt. Zur Durchführung von Lumineszenzmessungen ist eine solche Anordnung wegen der mangelnden Lichtdichtheit nicht geeignet, da insbesondere bei Lumineszenzmessungen sehr oft je nach Art der Lumineszenzreaktion nur schwache Lichtimpulse über eine sehr kurze Zeitspanne auftreten, die es zwingend erforderlich machen, Umgebungslicht oder Streustrahlungseffekte von benachbarten Proben zuverlässig von der Messung auszuschließen.

Ein Strahlungsmeßgerät für Lumineszenzmessungen ist beispielsweise aus der US-PS 4,772,453 bekannt. Das Grundprinzip der dort gezeigten Anordnung ist ein stationär angebrachter Strahlungsdetektor, der ebenfalls über eine Eintritts- und Umlenkoptik (Fig. 11) sukzessiv die Lumineszenzsignale der einzelnen darunter vorbeigeführten Probengefäße erhält. M x N-Probengefäße befinden sich hierbei auf einer gemeinsamen Aufnahmeplatte, die in der x-y-Ebene durch geeignete Führungsstangen und zugeordnete Antriebseinheiten so verschiebbar ist, daß jedes einzelne der Probengefäße der Aufnahmeplatte unter der Eintrittsblende des Strahlungsdetektors zu liegen kommt. Die hierbei erforderlichen Verschiebeeinrichtungen sind ziemlich platzraubend und müssen genau aufeinander abgestimmt sein, damit die Zuordnung Probengefäß-Eintrittsblende für jedes der Probengefäße zuverlässig und genau schrittweise möglich ist. Die Vielzahl von Führungselementen wie Führungsschienen und darauf gleitenden Führungsmuffen müssen daher mit hoher mechanischer Präzision (bzw. entsprechend geringen Toleranzgrenzen) gefertigt und montiert werden, um diese sichere Zuordnung einigermaßen zu gewährleisten und andererseits Störungen durch gegenseitige Behinderung der x-y-Verschiebungen, wie z.B. Verkantungen oder Verklemmungen auf ein Minimum zu reduzieren.

Hierbei wird auf die z-Komponente keine besondere Rücksicht genommen, da von der Konzeption dieses Strahlungsmeßgerätes her sich die Oberkante jedes Probengefäßes (Fig. 11) ohnehin in einem gewissen Abstand zur Unterkante der Eintrittsblende des Strahlungsdetektors befindet und hier folglich keine besonderen Vorkehrungen bezüglich besonderer mechanischer Präzision getroffen werden müssen. Diese Konzeption hat folglich den Nachteil, daß wegen der starken Abhängigkeit der Meßempfindlichkeit vom Abstand zwischen Probe und Detektor die Empfindlichkeit stark schwankend ist. Zum anderen muß mit erheblichen Einstreuungen in die Meßposition von benachbarten Probengefäßen gerechnet werden (sog. crosstalk), da wegen der Toleranzen in z-Richtung eine einwandfreie optische Abschirmung zwischen benachbarten Probenpositionen nicht möglich ist, ganz abgesehen von eventuell einfallendem Streulicht aus der Umgebung.

Dieses vorbekannte Strahlungsmeßgerät hat also die Nachteile sowohl niedriger als auch schwankender Empfindlichkeit und kann somit ebenfalls nicht für empfindliche Lumineszenzmessungen benutz werden.

Diese Mängel werden gemildert bei einer Vorrichtung gemäß der EP 0 181 060, bei der der Strahlungsdetektor in seiner Meßposition unmittelbar auf dem auszumessenden Probengefäß festsitzt, um eine optische Dichtwirkung gegen äußere Strahlung zu erreichen. Zum Übergang zwischen den Meßpositionen wird lediglich vermerkt, daß entweder die Aufnahmeplatte oder die Eintrittsblende des Strahlungsdetektors bewegt werden muß, wozu dann unter Umständen die Eintrittsblende des Strahlungsdetektors von ihrem festen Sitz auf einem Probengefäß abgehoben werden muß.

Auch bei einer Strahlungsmeßvorrichtung gemäß der EP-A-0 329 120 sind aufwendige Vorrichtungen erkennbar, um die auf einem Film 80 ablaufenden Lumineszenzreaktionen optimal auszuwerten, wozu offensichtlich auch eine vertikale Absenkung von Reaktionsbehältern 32 auf diesen Film 80 gehört. Das Problem einer zuverlässigen Abdichtung bei der sukzessiven Messung mehrerer Probengefäße stellt sich bei dieser Vorrichtung folglich nicht.

Aus den oben zur US-PS 4,772,453 hinsichtlich der dort benutzten Verschiebeeinrichtungen gegebenen Erläuterungen wird klar, daß ein Abheben und Wiederaufsetzen des Strahlungsdetektors Einrichtungen zu einer zusätzlichen Vertikalbewegung des Detektors bedingen, deren Bewegungsablauf mit dem Bewegungsablauf der Bauelemente koordiniert werden muß, die für die Horizontalverschiebung der Aufnahmeplatte in der x-y-Ebene verantwortlich sind, also zu einer weiteren baulichen Komplizierung führen.

Wie die ebenfalls angedeutete Lösung einer Verschiebung des Detektors konstruktiv gelöst werden könnte, bleibt in der Offenbarung der EP-A-0 181 060 offen; stattdessen wird offenbar als Alternative die Verwendung mehrerer Strahlungsdetektoren vorgeschlagen.

Die Gegenüberstellung der genannten beiden Druckschriften zeigt, daß die grundsätzlich wünschenswerten Eigenschaften eines konstruktiv einfachen Aufbaus einerseits und einer lichtdichten Abschirmung des kritischen Kopplungsbereichs zwischen Probengefäß und Strahlungsdetektor in der Meßposition andererseits mit den vorgeschlagenen Lösungen nicht realisierbar sind, oder zumindest kein konkreter Weg hierzu erkennbar wird.

Die geschilderte Problematik hinsichtlich der bekannten Verschiebeeinrichtungen ist möglicherweise durchaus erkannt worden; die Lösung wurde aber (wie bei der EP-A-0 181 060 auch angedeutet) offenbar in der Konzeption einer Meßvorrichtung mit mehreren, reihenförmig angeordneten Detektoren gesehen (EP-A-0 025 350; DE-OS 31 10 239), was zwar eine einfachere eindimensionale Verschiebung der Probenplatte ermöglicht, aber einen unverhältnismäßig hohen Aufwand bedingt.

Es ist daher Aufgabe der Erfindung, das gattungsgemäße Strahlungsmeßgerät so weiterzubilden, daß die Meßempfindlichkeit hoch und von Probe zu Probe konstant ist, und daß die Abschirmung des Lumineszenzsignals in der Meßposition gegen Umgebungslicht, wie beispielsweise Crosstalk-Effekte, verbessert wird, wobei trotz dieser gegensätzlichen Anforderungen die hierzu erforderlichen Einrichtungen mechanisch möglichst einfach und präzise arbeiten sollen.

Erfindungsgemäß wird diese Aufgabe gemäß dem kennzeichnenden Teil des Patentanspruchs 1 gelöst.

Der Grundgedanke der erfindungsgemäßen Lösung, die stationäre Blendenplatte, ermöglicht in Verbindung mit der elastischen Anpressung der Probengefäße an ihre Unterseite zunächst eine optimale Abdichtung. Darüber hinaus erfüllt sie auch in mechanischer Hinsicht eine wesentliche Aufgabe: durch ihre stationäre Halterung bildet sie eine "Anschlagfläche" für die von unten elastisch angedrückten Probengefäße. Diese Anschlagfunktion wiederum entlastet auch den oben auf der Blendenplatte aufsitzenden Strahlungsdetektor oder ein entsprechendes Anschlußelement für den Strahlungsdetektor vom Druck der Probengefäße. Außerdem ermöglicht die elastische Anpressung der Aufnahmeplatte mit den Probengefäßen geringfügige Verschwenk- oder Kippbewegungen der Aufnahmeplatte um eine horizontale Achse; diese Bewegungen führen automatisch zu einer parallelen Ausrichtung der Aufnahmeplatte mit den Probengefäßen zur stationären Blendenplatte. Hierdurch sind beispielsweise eventuelle Maßungenauigkeiten in der Höhe der Probengefäße kompensierbar.

Eine erste praktische Realisierung des Erfindungsgedankens kann somit darin bestehen, daß die Probengefäße in ihrer Gesamtheit ähnlich wie beim vorbekannten Gerät in der x-y-Ebene zweidimensional transportiert werden, daß aber die zu den beschriebenen, in der vorbekannten Konstruktion unvermeidbaren Nachteilen führenden Ungenauigkeiten durch vertikale, geringfügige Bewegungskomponenten, die bei der Anwendung von Verschiebeeinrichtungen etwa gemäß der US-PS 4,772,453 entstehen können, dadurchausgeglichen werden, daß die Aufnahmeplatte in jeder Position elastisch an die Blendenplatte gedrückt und somit parallel zu dieser ausgerichtet wird.

Bei einer zweiten praktischen Realisierung ist die Blendenplatte mit mehreren, eine Lochreihe bildenden Blendenlöcher versehen und der Strahlungsdetektor so ausgebildet, daß er über diese Blendenlöcher gleitend verschiebbar ist.

Bei dieser bevorzugten Ausgestaltung der Erfindung kann dann die Verschiebung der Probengefäße nur in einer Koordinate (x) und die Verschiebung der Eintrittsblende des Detektors über die dann hierzu senkrecht angeordnete Lochreihe in der anderen Koordinate (y) erfolgen. Die Blendenplatte dient hier somit nicht nur als optisches Dichtelement und Anschlagsfläche, sondern auch zur Führung der Eintrittsblende des Detektors.

Im Gegensatz zum Verschiebe-Mechanismus bei der ersten Ausgestaltung mit einer gattungsgemäßen Verschiebeeinrichtung, bei der sowohl die Verschiebekräfte in x- als auch in y-Richtung an der Aufnahmeplatte für die Probengefäße sozusagen aufeinandergesetzt sind, sind die Antriebe bei dieser Ausgestaltung der Erfindung entkoppelt, das heißt, ein Antriebsaggregat greift an der Eintrittsblende des Detektors oder am Detektor selbst an (y-Richtung), das andere Ahtriebsaggregat greift an der Aufnahmeplatte mit den Probengefäßen (x-Richtung) an, so daß jeweils ein Antriebsaggregat die für eine einwandfreie Zuordnung und Funktion erforderliche Präzision nur in der ihm zugeordneten Verschieberichtung aufweisen muß und entsprechend starr und präzise mit dem zu verschiebenden Bauteil verbunden sein muß, wogegen Abweichungen und Toleranzen in der jeweils anderen Richtung ohne weiteres akzeptabel sind. Dies vereinfacht einerseits wesentlich den technischen Aufbau, schafft aber andererseits auch die konstruktive Voraussetzung zur Aufrechterhaltung der optimalen optischen Abdichtung an der Meßstelle, da die dort wirkende elastische Anpressung in z-Richtung wirkt und folglich einerseits unabhängig von den Antriebsaggregaten in x- bzw. y-Richtung ist, andererseits in ihrer Wirksamkeit von eventuellen Toleranzen der Bauteile mit ihren Antriebseinrichtungen nicht beeinflußt wird. Die Beschränkung der eingesetzten Antriebs- und Führungsbauteile auf die erforderliche Präzision jeweils nur in der einen Koordinate bringt Fertigungsvereinfachungen und somit Kostenersparnisse und erhöht die Dauerzuverlässigkeit des Gerätes.

Die lineare Bewegung der Aufnahmeplatte mit den Probengefäßen ermöglicht zudem durch entsprechende Dimensionierung des Verschiebeweges eine einfache, beispielsweise schlittenartige Zu-und/oder Abführung von Aufnahmeplatten unter die stationäre Blendenplatte; diese einfache Zu- und Abführung gestattet wiederum eine weitere Rationalisierung, indem beispielsweise mehrere Aufnahmeplatten mittels einer paternosterartigen Fördervorrichtung nacheinander in die Verschiebeebene gefördert werden und dort vollautomatisch zugeführt und auf der anderen Seite wieder abgeführt werden.

Gemäß einer vorteilhaften Ausgestaltung ist vorgesehen, daß die Probengefäße als Vertiefungen einer integral oder modulartig aufgebauten Probenplatte (Mikrotest- oder sogenannte Mikrotiter-Platte) ausgebildet sind, die in der horizontalen Ebene fixiert auf der Aufnahmeplatte sitzt, und daß zur elastischen Anpressung an die Unterseite der Blendenplatte zwischen Probenplatte und Aufnahmeplatte eine elastische Einlage, beispielsweise aus Schaumstoff eingebracht ist. Es kann zur Halterung individueller Probengefäße aber ohne weiteres auch beispielsweise ein separater Halteblock mit entsprechenden Aufnahmebohrungen verwendet werden. Die Probengefäße sind hierbei durchsichtig oder undurchsichtig zu wählen in Abhängigkeit von der Art der nachzuweisenden Lumineszenzreaktion.

Die Aufnahmeplatte kann hierbei einfach auf die Größe der jeweiligen Probenplatte abgestimmt werden, und die Ausbildung der elastischen Einlage aus Schaumstoff, beispielsweise als randseitig verlaufender Schaumstoffstreifen, ist konstruktiv einfach, preiswert und zuverlässig.

Gemäß weiteren vorteilhaften Ausgestaltungen ist vorgesehen, daß der Boden der Aufnahmeplatte in einem Abstand H zur Unterseite der Blendenplatte einstellbar ist, so daß die elastische Einlage in der Meßposition zusammengepreßt ist und folglich den Anpreßdruck der Probengefäße an die Unterseite der Blendenplatte erzeugt.

Die Dicke der Schaumstoffeinlage einerseits und die Dimensionierung des Abstandes H definieren dann folglich die Anpreßkraft, mit der die Mikrotiterplatte von unten an die stationäre Blendenplatte angedrückt und die Probengefäße abgedichtet werden.

Eine entgegen der Verschieberichtung der Aufnahmeplatte zeigende Stirnseite der Blendenplatte weist eine rampenartige Abschrägung auf, mittels der die in der zugeführten Aufnahmeplatte angeordnete elastische Einlage zusammengepreßt wird. Diese rampenartige Abschrägung bewirkt die hierzu erforderliche ZusammenDressung der Schaumstoffeinlage, wenn die Aufnahmeplatte mit der Probenplatte von ihrer Position außerhalb der stationären Blendenplatte (beispielsweise einer Be- und Entladeposition) unter die Blendenplatte geführt wird.

In weiterer Ausgestaltung ist vorgesehen, daß die Führungselemente auf der Oberseite der stationären Blendenplatte durch eine sich über die Lochreihe erstreckende Führungsnut gebildet sind.

Diese Führungsnut hat nicht nur den Vorteil einer einfachen konstruktiven Ausbildung und einfacher Herstellung, sondern sie hat darüber hinaus einen zusätzlichen Abdichteffekt. Dieser Abdichteffekt wird verstärkt, wenn gemäß einer weiteren Ausgestaltung in der Führungsnut ein Führungsblock mit einer Blendenbohrung gleitend verschiebbar angeordnet ist, der seinerseits die Eintrittsblende des Detektors lichtdicht umschließt.

Eine weitere Verbesserung läßt sich schließlich noch erzielen, wenn der Führungsblock gemäß einer weiteren Ausgestaltung in seiner Länge L so gewählt ist, daß er zumindest die beiden benachbarten Löcher der Lochreihe verschließt, wenn seine Blendenbohrung koaxial zu einem Loch der Lochreihe (Meßposition) liegt. Damit werden jegliche Crosstalk-Effekte seitens der beiden in Richtung der Führungsnut benachbarten Probengefäße praktisch eliminiert.

In weiterer Ausgestaltung ist vorgesehen, daß parallel zur Lochreihe eine weitere zweite Lochreihe angeordnet ist, die die Öffnungen der benachbarten Reihe von Probengefäßen freigibt. Hierdurch ist es möglich, vorbereitende Meßschritte, beispielsweise die Zugabe von lumineszenz-initiierender Substanz zu ermöglichen, wenn dies wünschenswert oder erforderlich ist und eine solche Zugabe nicht gleichzeitig oder unmittelbar vor der Messung erfolgen muß.

Weiterhin ist vorgesehen, daß die Blendenplatte in Richtung der Führungsnut über die Aufnahmeplatte hinausragt und dort zumindest eine der Lochreihen sich befindet. Diese zusätzliche Öffnung in der Lochnut dient als Warteposition bzw. Endposition des zugehörigen y-Antriebsaggregates oder auch für Testzwecke, wie z.B. dem Durchspülen der Zuführungsleitungen (priming); hierbei ist es in der Regel notwendig, unterhalb dieser zusätzlichen Bohrung einen Behälter vorzusehen.

Zur konstruktiv vorteilhaften Ausbildung der Bauteile zum Nachweis der Lumineszenz ist gemäß einer weiteren Ausbildung die Eintrittsblende über eine Lichtleiter-Anordnung mit dem Eingang des Strahlungsdetektors, insbesondere eines Photomultipliers verbunden, die die nachzuweisenden Lichtquanten um etwa 90° zum horizontal liegenden Strahlungsdetektor umlenkt. Die Geometrie dieser Anordnung ist hier etwa vergleichbar zu der Vorrichtung gemäß dem oben genannten US-Patent 4.772,453, jedoch ist die Führung der Lichtquanten im Lichtleiter die technisch bessere Lösung als die dort beschriebene Umlenkoptik. Im Hinblick auf die mechanische Konzeption der erfindungsgemäßen Vorrichtung eröffnet dies die Möglichkeit, Eintrittsblende, Lichtleiter und Strahlungsdetektor als starre Baueinheit auszubilden, die um eine erste, parallel zur Verschieberichtung der Aufnahmeplatte (x-Richtung) liegende Achse verschwenkbar ist.

Damit liegt die Eintrittsblende (bzw. der Führungsblock) in der Führungsnut, grob vergleichbar etwa dem Abtastsystem eines Plattenspielers, wobei Lichtleiter und Strahlungsdetektor dem Tonarm entsprechen.

Gemäß einer weiteren Ausbildung läßt sich die "Auflagekraft" der Eintrittsblende bzw. des Führungsblocks in der Führungsnut dadurch definieren, daß außerhalb der ersten Achse ein Federelement an dieser starren Baueinheit Eintrittsblende/Lichtleiter/Strahlungsdetektor angreift und ein Drehmoment erzeugt, durch das der Führungsblock mit definierter Vertikalkraft in die Führungsnut gedrückt wird. Durch geeignete Dimensionierung dieses Federelementes kann abhängig vom Gewicht des Strahlungsdetektors und den sonstigen an dieser Hebelanordnung angreifenden Kräften und Gewichten die gewünschte Auflagekraft des Führungsblocks in der Führungsnut erzeugt werden, die einerseits ein störungsfreies Gleiten in der Führungsnut ermöglicht, andererseits aber in der Vertikalebene (z-Richtung) praktisch toleranzunempfindlich ist.

Eine weitere vorteilhafte Ausbildung sieht vor, daß die Eintrittsblende mit dem Lichtleiter um eine zweite, in der Längsachse des Strahlungsdetektors liegende Achse verschwenkbar ist.

Diese einfache Weiterbildung gestattet eine einfache Inspektion des Eintrittsquerschnitts der Eintrittsblende, indem diese um diese zweite Achse Y-Y nach oben in das Blickfeld des Benutzers geschwenkt wird.

Weiterhin ist vorgesehen, daß oberhalb der Eintrittsblende eine Injektionsvorrichtung gehalten ist, über die in der Meßposition eine chemische Substanz durch die Eintrittsblende, die Blendenbohrung des Führungsblocks und eines der Löcher der Lochreihe der Blendenplatte in ein Probengefäß injizierbar ist.

Im Unterschied zum gattungsbildenden Strahlungsmeßgerät ergibt sich hieraus die Möglichkeit, unter optimaler Abdichtung gegen Streustrahlung von außen einerseits, insbesondere eine lumineszenzinitiierende Substanz zuzuführen und die unmittelbar darauf auftretenden Photonen über die Lichtleitervorrichtung dem Photomultiplier zuzuleiten. Derartige Messungen sind mit dem gattungsgemäßen Strahlungsmeßgerät unmöglich.

Die bei dem gattungsgemäßen Strahlungsmeßgerät angedeutete Messung der vorherigen Zugabe von Reagenzien ist beim erfindungsgemäßen Gerät gemäß einer weiteren Ausbildung einfach dadurch möglich, daß oberhalb der Eintrittsblende eine weitere Injektionsvorrichtung gehalten ist, über die eine chemische Stubstanz durch ein Loch der zweiten Lochreihe in ein Probengefäß injizierbar ist.

Eine alternative Ausbildung sieht vor, daß anstelle einer weiteren Injektionsvorrichtung das erfindungsgemäße Strahlungsmeßgerät einen Lichtleiter aufweist, durch den zur Durchführung von Fluoreszenzmessungen Fluoreszenzanregungslicht in den Probenraum gebracht wird; der dazu verwendete Lichtleiter muß natürlich für das bei Fluoreszenzmessungen häufig erforderliche kurzwellige Licht durchlässig sein, so daß er vorzugsweise aus Quarz hergestellt wird.

Weitere Ausgestaltungen der Erfindung betreffen die Konzeption des Gehäuses des erfindungsgemäßen Strahlungsmeßgerätes, wobei insbesondere eine Be- und Entladeöffnung von Bedeutung ist, über die die Probenplatten eingelegt und entnommen werden und die mittels einer Abdeckplatte lichtdicht verschließbar ist, wobei während der Durchführung der Messung ein Sicherungsverschluß in Aktion tritt, der die Öffnung dieser Abdeckplatte verhindert.

Ein Ausführungsbeispiel des erfindungsgemäßen Strahlungsmeßgerätes wird nun anhand von Zeichnungen näher erläutert. Es zeigen:
- Fig. 1: eine perspektivische, vereinfachte Gesamtdarstellung des Strahlungsmeßgerätes ohne Gehäuse,
- Fig. 2: eine erste Schnittdarstellung in der x-z-Ebene III-III gemäß Fig. 3,
- Fig. 3: eine zweite Schnittdarstellung in der y-z-Ebene gemäß II-II der Fig. 3 und
- Fig. 4: eine Darstellung des Gehäuses.

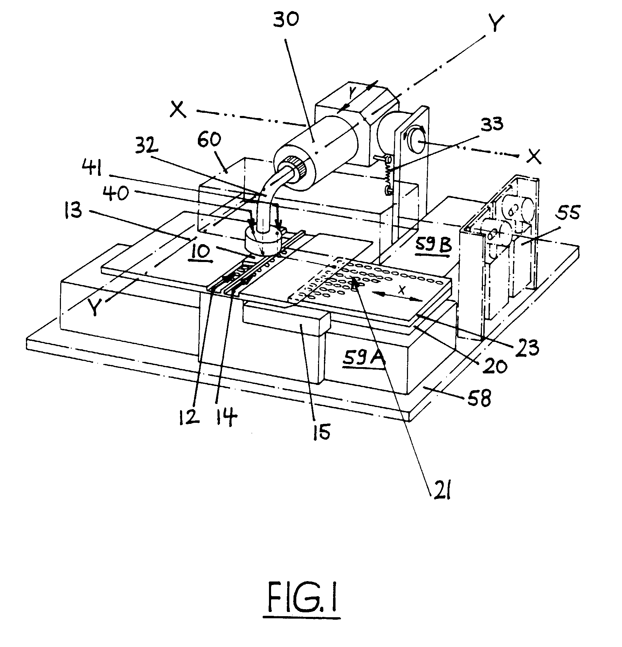

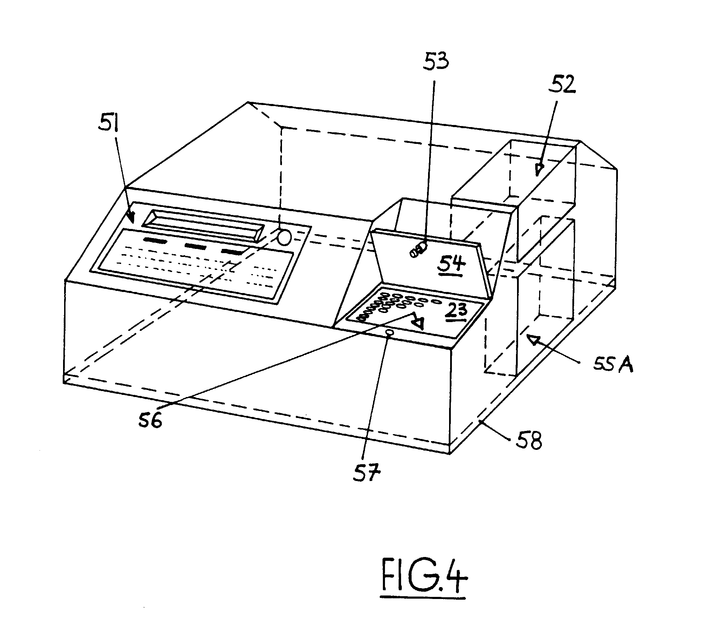

Fig. 1 zeigt in perspektivischer Darstellung das Strahlungsmeßgerät (ohne das in Fig. 4 separat dargestellte Gehäuse) und zur Vereinfachung der Darstellung ohne Schlauch- und Leitungsverbindungen, wie insbesondere die elektrischen Versorgungsanschlüsse des Photomultiliers 30 oder Schlauchverbindungen vom Injektor-Pumpenblock 55 zu den Injektionsvorrichtungen 40, 41. Das Strahlungsmeßgerät besteht aus folgenden wesentlichen Komponenten, die auf einer Grundplatte 58 montiert sind:
Horizontal und stationär angeordnet ist oberhalb der Grundplatte 58 eine stationäre Blendenplatte 10, die aus undurchsichtigem Material (Kunststoff oder Metall) besteht. Unter dieser Blendenplatte ist ein erster Antriebsblock 59A angeordnet, der kraftschlüssig mit einer Aufnahmeplatte 20 für eine Probenplatte 23 mit Probengefäßen 21 beispielsweise eine Mikrotiterplatte, verbunden oder verbindbar ist. Der Antriebsblock 59A weist Antriebselemente auf, wie beispielsweise einen Spindeltrieb oder auch Zahnriemenanordnungen wie beim oben genannten US-Patent, die es ermöglichen, daß die Aufnahmeplatte 20 in x-Richtung von einer in Fig. 1 dargestellten ersten Endposition bis zumindest einer zweiten Endposition verschiebbar ist, wo die letzte (in Fig. 1 rechte) Probengefäßreihe sich in Meßposition unterhalb der stationären Blendenplatte 10 befindet. Am Gehäuse des Antriebsblocks 59A ist eine Lesevorrichtung 15 zur Erkennung eines Bar-Code uaf der gegenüberliegenden Seitenfläche einer Probenplatte 23 angebracht.

Ein zweiter Antriebsblock 59B ist verbunden mit einer aus Detektor 30, Lichtleiter 32 und Eintrittsblende 31 bestehenden Anordnung derart, daß diese gesamte Anordnung in y-Richtung horizontal verschiebbar ist, derart, daß die Eintrittsblende auf einer ebenfalls in y-Richtung auf der stationären Blendenplatte 10 eingelassenen Führungsnut 12 gleiten kann. Der vom Antriebsblock 59B erzeugte Verschiebeweg in y-Richtung ist dabei so definiert, daß die beiden Endpositionen der Eintrittsblende 31 zumindest die beiden äußersten Bohrungen einer Lochreihe 11 überdecken, wobei die Eintrittsblende 31 fest und lichtdicht in einem Führungsblock 13 sitzt, der in der Führungsnut 12 in y-Richtung verschiebbar ist. Der Führungsblock 13 weist eine Blendenbohrung 13A auf, durch die jeweils ein Loch der Lochreihe 11 und damit ein zugeordnetes Probengefäß 21 zur Messung freigegeben wird.

Die gesamte Baueinheit Detektor 30/Lichtleiter 32/Führungsblock 13 ist um eine horizontale Achse X-X (in x-Richtung) verschwenkbar, so daß der Führungsblock 13 dem Verlauf der Führungsnut 12 etwa vergleichbar dem Tonabnehmer eines Plattenspieler-Tonarms folgt. Ein Federelement 33, das an dieser Baueinheit außerhalb der Schwenkachse X-X angreift, erzeugt ein definierbares Drehmoment, das in einer bestimmten Auflagekraft des Führungsblocks 13 in der Führungsnut 12 resultiert. Dieses Drehmoment wirkt dabei Drehmomenten von Anschlußteilen wie Kabeln oder ähnlichem am Detektor 30 entgegen, so daß der Einfluß dieser Anschlußteile auf die Auflagekraft des Führungsblocks 13 zuverlässig kompensierbar ist.

Der Lichtleiter 32 mit Eintrittsblende 31 und Führungsblock 13 ist zudem um eine koaxial zum Detektor 30 liegende Schwenkachse Y-Y (in y-Richtung) verschwenkbar. Durch Kombination dieser beiden Schwenkbewegungen kann beispielsweise die Eintrittsblende 31 mit dem dort endenden Lichtleiter 32 einfach überprüft werden, indem zunächst die gesamte Baueinheit um die Achse X-X hochgeschwenkt und dann der Lichtleiter um die Achse Y-Y weggeschwenkt wird.

Seitlich auf der Grundplatte 58 befindet sich ein Injektor-Pumpenblock 55, dessen beide Anschlüsse mit Injektionsvorrichtungen 40, 41 mittels (nicht dargestellter) Pumpenschläuche verbunden sind.

Parallel zur Lochreihe 12 befindet sich eine weitere Lochreihe 14, deren Bedeutung weiter unten noch erläutert werden wird.

Schließlich ist auf der Grundplatte 58 noch eine Elektronik-Einheit 60 untergebracht, die für die Auswertung der Signale des Detektors 30 in Koordination mit der Position von Halterung 23 und Detektor 30 zuständig ist und andererseits von einem Bedienungs- und Anzeigefeld 51 (Fig. 4) im Gehäuse 50 angesteuert wird und über entsprechende Steuerleitungen mit den Antriebsblöcken 59A, 59B verbunden ist.

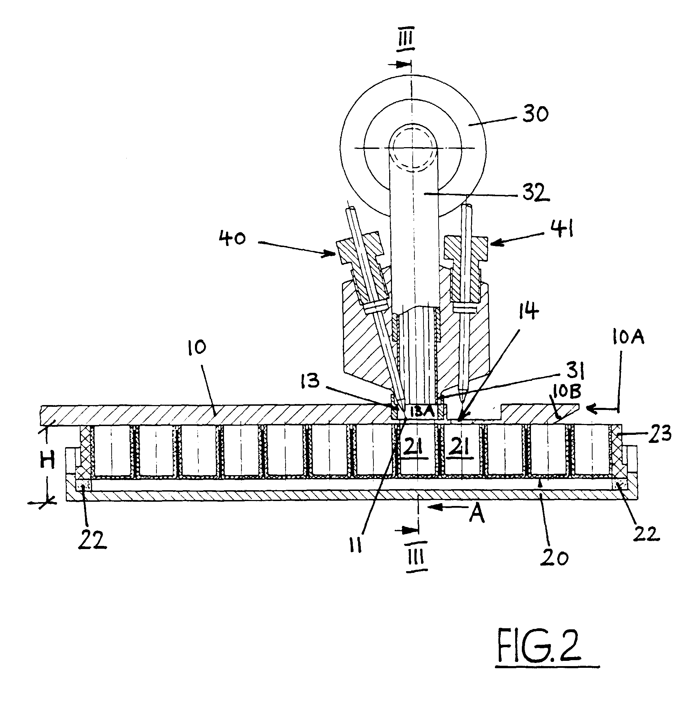

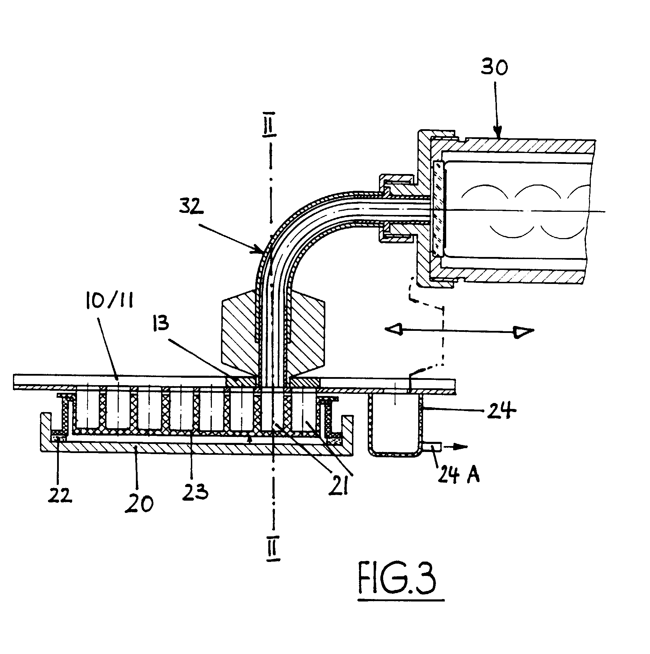

Bevor nun die Arbeitsweise des Strahlungsmeßgerätes erläutert wird, sollen noch die Einzelheiten im Bereich der stationären Blendenplatte 10 anhand der Schnittdarstellungen der Fign. 2 und 3 beschrieben werden:
In Fig. 2 und 3 befindet sich die Aufnahmeplatte mit der Probenplatte 23 mit Probengefäßen 21 unterhalb der Blendenplatte 10. Zwischen der wannenartig ausgebildeten Aufnahmeplatte 20 einerseits und der Unterseite der Probenplatte 23 ist stirnseitig jeweils ein Schaumstoffstreifen 22 eingelegt, der in der dargestellten Position zusammengedrückt ist, so daß die Probengefäße 21 mit ihrer Oberkante fest an die Unterseite der Blendenplatte 10 gedrückt werden und somit eine optische Abdichtung benachbarter Probengefäße gegeneinander zur Vermeidung von Crosstalk-Effekten erreicht wird. Die rechts dargestellte Stirnseite 10A der Blendenplatte 10 weist eine rampenartige Abschrägung 10B auf, die bei der Zuführung der Probenplatte aus der in Fig. 1 dargestellten vorderen Endposition der Probenplatte 23 in die in Fig. 2 dargestellte Meßposition bewirkt, daß die Probe platte 23 beim Einschieben (Pfeil A in Fig. 2) unter die Blendenplatte 10 unter Zusammenpressung der Schaumstoffeinlage 22 gedrückt wird.

Bei der bevorzugten Verwendung von sogenannten Mikrotest-Platten ("Mikrotiter"-Platten) als Probenplatte 23 mit integrierten Probegefäßen 21 beinhaltet eine solche Probenplatte 23 acht x zwölf Probengefäße 21 (12 in x-Richtung in Fig. 2, 8 in y-Richtung in Fig. 3).

Die auf der Oberseite der Blendenplatte 10 ausgebildete Lochreihe 11 ist nun so dimensioniert, daß deren Löcher kongruent mit den Öffnungen einer Reihe von Probengefäßen 21 ist, wie dies insbes, in Fig.3 erkennbar ist. Diese Lochreihe befindet sich im Boden einer Führungsnut 12, in der der Führungsblock 13 frei verschiebbar gleitet, in dem die Eintrittsblende 31 des Lichtleiters 32 endet. In der dargestellten bevorzugten Ausführungsform ist der Führungsblock 13 als länglicher Quader ausgebildet, in dessen Mitte eine Blendenbohrung 13A sich befindet, die geringfügig größer ist als die Löcher der Lochreihe 11 bzw. die Austrittsöffnungen der Probengefäße 21. Das Zusammenwirken der oben beschriebenen Merkmale ermöglicht also, daß durch Verschieben des Führungsblocks 13 in der Führungsnut 14 (Verschiebung der Baueinheit 30/32/13 mittels Antriebsblock 59B) immer genau eine Öffnung eines Probengefäßes 21 freigegeben wird, d.h., daß der Detektor 30 über den Lichtleiter 32, die Blendenbohrung 13A und das darunter liegende Loch der Lochreihe 11 in das darunter zentrierte Probengefäß "sehen" kann. Bei dem dargestellten Ausführungsbeispiel endet in der Blendenbohrung 13A des Führungsblocks 13 eine erste Injektionsvorrichtung 40, mit der insbesondere bei Chemi-Lumineszenz-Messungen die die Lumineszenzreaktion initiierende chemische Substanz in der erreichten Meßposition in das darunterliegende Probengefäß 21 injiziert wird, worauf dann in bekannter Weise die unmittelbar folgenden Lumineszenzphotonen über den Lichtleiter 32 vom Detektor 30 erfaßt und von der Elektronikeinheit 60 diesem individuellen Probengefäß zugeordnet und entsprechend gespeichert wird.

Eine weitere Injektionsvorrichtung 41 ist vorgesehen, um durch die Öffnungen einer zweiten Lochreihe 14 alternativ oder zusätzlich für Messungen verschiedener Art chemische Substanzen in die benachbarte Reihe von Probengefäßen 21 injizieren zu können, wie dies beispielsweise auch beim gattungsgemäßen Strahlungsmeßgerät vorgesehen ist, bei dem eine derartige Injektionsvorrichtung zur Injizierung der lumineszenz-aktivierenden Substanz dient.

Obwohl die beschriebene Ausgestaltung der baulichen Konzeption und Zuordnung von Detektor/Lichtleiter/Eintrittsblende und Injektionsvorrichtungen besonders vorteilhaft ist, soll betont werden, daß es für die Funktion des Strahlungsmeßgerätes grundsätzlich unwesentlich ist, auf welche Weise die durch die Blendenbohrung 13A des Führungsblocks 13 tretende Photonen letztendlich hervorgerufen und/oder ausgewertet werden hierfür sind beispielsweise auch Anordnungen gemäß dem gattungsgemäßen Strahlungsmeßgerät denkbar, oder z.B.die unmittelbare Ankopplung an einen Detektor, wobei dann die Eintrittsblende 31 direkt oder über ein zusätzliches Bauteil durch die Eintrittsblende des Detektors gebildet würde.

Bei dem bevorzugt dargestellten Ausführungbeispiel ist es besonders zweckmäßig (Fig. 3), wenn sich die Blendenplatte 10 und die Lochnut 11 in y-Richtung seitlich über die Aufnahmeplatte 20 hinaus erstreckt und dort ein weiteres Loch mit einem darunter befindlichen Behälter 24 mit Absaugstutzen 24A angeordnet ist. Die Position, in der sich die Blendenbohrung 13A über diesem Behälter 24 befindet, wäre dann die eine Endposition (in Fig. 3 gestrichelt teilweise angedeutet) der aus Detektor 30 und Lichtleiter 32 bestehenden Auswerteeinheit. In dieser Position können besonders vorteilhaft Spül-und Testvorgänge mit den Injektionsvorrichtungen 40 und 41 durchgeführt werden (sogenannte "priming-position").

Zum lichtdichten Abschluß des gesamten Strahlungsmeßgerätes dient das in Fig. 4 dargestellte Gehäuse 50:
Ein Bedienungs- und Anzeigefeld 51 dient zur Steuerung des Strahlungsmeßgerätes und zur Anzeige von Funktionszuständen und Meßwerten, ein Aufnahmeraum 52 dient zur sicheren Aufbewahrung der benötigten chemischen Reagenzien, eine seitliche Aussparung 55A ist für den Injektor-Pumpenblock 55 vorgesehen und eine Be- und Entladeöffnung dient zum Einlegen und Entnehmen einer Probenplatte 23 mit Probengefäßen 21 (beispielsweise einer Mikrotiter-Platte). Diese Be- und Entladeöffnung 56 ist mit einer Abdeckklappe 54 verschließbar, und korrespondierende Verschlußelemente 53/57, die ineinandergreifen, gewährleisten, daß die Abdeckklappe 54 nur dann zu öffnen ist, wenn sich die Probenplatte 23 mit den Probengefäßen 21 in der in Fig. 4 dargestellten Endposition, also nicht in Meßposition befindet.

Die Funktionsweise des Strahlungsmeßgerätes soll nun noch kurz beispielhaft erläutert werden:
Nach Einlegen der Probenplatte 23 in die Be- und Entladeöffnung 56 wird die Abdeckklappe 54 im Gehäuse 50 geschlossen. Danach wird der Antriebsblock 59A aktiviert, und gleichzeitig wird die Abdeckklappe 54 verriegelt, so daß ein Zugriff in die Be- und Entladeöffnung 56 nicht mehr möglich ist.

Die Probenplatte 23 mit den Probengefäßen 21 wird dann in der in Fig. 2 mit A bezeichneten Richtung (x-Koordinate) unter die Blendenplatte 10 geschoben, wobei die Schaumstoffeinlage 22 zusammengepreßt wird und somit die Probengefäße von unten an die Blendenplatte 10 gepreßt werden. Sobald die (in Fig. 1 linke) erste Reihe (in y-Richtung) unterhalb der Lochreihe 11 positioniert ist, derart, daß die Löcher der Lochreihe 11 koaxial mit den Öffnungen der darunter liegenden Probengefäßreihe übereinstimmen, wird der Vorschub des Antriebsblocks 59A gestoppt und die erste Messung wird durchgeführt. Danach wird der Antriebsblock 59A wieder aktiviert und so wird die (in Fig. 1 hintere) Reihe von 12 Meßpositionen durchfahren, wobei der Detektor (30) stationär bleibt.

Zu jeder dieser 12 Meßpositionen wird über die Injektionsvorrichtung 40 eine geeignete Substanz in das jeweils darunter liegende Probengefäß 21 eingespritzt und die darauf folgende Lumineszenzreaktion vom Detektor 30 gemessen und von der Elektronikeinheit 60 registriert (und ggf. im Bedien- und Anzeigefeld 51 angezeigt) werden.

Nach Durchführung der ersten Meßreihe von zwölf Messungen wird nun die Aufnahmeplatte 20 entgegen Richtung A zurückgeschoben und die Eintrittsblende 31 mit dem Führungsblock 13 des Detektors 30 um ein Loch der Lochreihe 11 weitergerückt, so daß die nächste Probengefäßreihe durchgemessen werden kann, wobei wiederum zwölf Messungen durchgeführt werden.

Auf diese Art werden an m = 8 (Fig. 3) Probengefäßreihen die Messungen durchgeführt. Nach vollständiger Ausmessung der m x n Probengefäße 21 fährt dann der Antriebsblock 59A die Aufnahmeplatte 20 wieder zurück bis in deren Endposition unterhalb der Be- und Entladeöffnung 56. Bei Erreichen dieser Position werden die Verschlußelemente 53/57 entriegelt, so daß die Abdeckklappe 54 geöffnet und die Probenplatte mit den ausgemessenen Proben entnommen werden kann.

## Patentansprüche

1. Strahlungsmeßgerät, insbesondere zur Lumineszenzmessung, bestehend aus einem Strahlungsdetektor (30), Probengefäßen, die als matrixartig angeordnete Vertiefungen in einer Probenplatte (23) ausgebildet sind, Blendeneinrichtungen (10,31) mit einer stationär gehaltenen Blendenplatte (10) mit mindestens einem Blendenloch, die zum Durchlassen der Strahlung eines bestimmten Probengefäßes zur Auswertung durch den Strahlungsdetektor zwischen dem Strahlungsdetektor (30) und der Probenplatte (23) stationär gehalten ist, und Verschiebeeinrichtungen zur sukzessiven Zuordnung durch horizontale Verschiebung der Probenplatte (23) jeweils eines der Probengefäße zum Strahlungsdetektor (30) derart, daß in der Meßposition eines Probengefäßes dieses Probengefäß, ein Blendenloch (11) der Blendenplatte (10) und ein weiteres Blendenloch (31) koaxial zueinander angeordnet sind, derart, daß ausschließlich die von diesem Probengefäß ausgehende Strahlung dem Strahlungsdetektor zugeführt wird,
dadurch gekennzeichnet, daß als weiteres Blendenloch (31) die Eintrittsblende des Strahlungsdetektors (30) lichtdicht auf der Blendenplatte (10) aufsitzt daß die Probenplatte (23) in einer Aufnahmeplatte (20) gehalten ist, daß zwischen Probenplatte (23) und Aufnahmeplatte (20) eine elastische Einlage (22), beispielsweise aus Schaumstoff, eingebracht ist, und daß der Abstand (H) zwischen dem Boden der Aufnahmeplatte (20) und der Unterseite der Blendenplatte (10) derart eingestellt ist, daß die elastische Einlage (22) zusammengepreßt ist und einen Anpreßdruck der Probenplatte (23) an die Unterseite der eine Anschlagfläche bildenden Blendenplatte (10) erzeugt, so daß in der Meßposition jedes Probengefäßes dieses lichtdicht an der Blendenplatte (10) anliegt.

2. Strahlungsmeßgerät nach Anspruch 1, dadurch gekennzeichnet, daß die Blendenplatte (10) mehrere, mindestens eine Lochreihe (11) bildende Blendenlöcher aufweist, über die die Eintrittsöffnung (31) des Detektors (30) mit Hilfe von Führungselementen auf der Oberseite der Blendenplatte (10) gleitend verschiebbar ist.

3. Strahlungsmeßgerät nach Anspruch 1-2, dadurch gekennzeichnet, daß die Verschiebung der Probengefäße (21) nur in einer Koordinate (x) und die Verschiebung der Eintrittsblende (31) des Detektors (30) über eine hierzu senkrecht angeordnete Lochreihe (11) in der anderen Koordinate (y) erfolgt.

4. Strahlungsmeßgerät nach Anspruch 1, dadurch gekennzeichnet, daß die entgegen der Verschiebeeinrichtung (A) der Aufnahmeplatte (20) zeigende Stirnseite (10A) der Blendenplatte (10) eine rampenartige Abschrägung (10B) aufweist, mittels der die in der zugeführten Aufnahmeplatte (20) angeordnete elastische Einlage (22) zusammengepreßt wird.

5. Strahlungsmeßgerät nach Anspruch 2 und 3, dadurch gekennzeichnet, daß die Führungselemente auf der Oberseite der stationären Blendenplatte (10) durch eine sich über die Lochreihe (11) erstreckende Führungsnut (12) gebildet sind.

6. Strahlungsmeßgerät nach Anspruch 5, dadurch gekennzeichnet, daß in der Führungsnut (12) ein Führungsblock (13) mit einer Blendenbohrung (13A) gleitend verschiebbar angeordnet ist, der seinerseits die Eintrittsblende (31) des Detektors (30) lichtdicht umschließt.

7. Strahlungsmeßgerät nach Anspruch 6, dadurch gekennzeichnet, daß der Führungsblock (13) in seiner Länge (L) so gewählt ist, daß er zumindest die den benachbarten Löcher der Lochreihe (11) verschließt, wenn in der Meßposition seine Blendenbohrung (13A) koaxial zu einem Loch der Lochreihe (11) liegt.

8. Strahlungsmeßgerät nach Anspruch 3, dadurch gekennzeichnet, daß parallel zur Lochreihe (11) eine weitere zweite Lochreihe (14) angeordnet ist, die die Öffnungen der benachbarten Reihe von Probengefäßen (21) freigibt.

9. Strahlungsmeßgerät nach Anspruch 5 und 6, dadurch gekennzeichnet, daß die Blendenplatte (10) in Richtung der Führungsnut (12) über die Aufnahmeplatte (20) hinausragt und dort zumindest ein Loch der Lochreihe (11) und/oder der zweiten Lochreihe (14) sich befindet.

10. Strahlungsmeßgerät nach Anspruch 1, dadurch gekennzeichnet, daß die Eintrittsblende (31) über eine Lichtleiter-Anordnung (32) mit dem Eingang des Strahlungsdetektors (30), insbesondere eines Photomultipliers, verbunden ist, die die nachzuweisenden Lichtimpulse um etwa 90° zum horizontal liegenden Strahlungsdetektor (30) umlenkt.

11. Strahlungsmeßgerät nach Anspruch 3 und 10, dadurch gekennzeichnet, daß Eintrittsblende (31), Lichtleiter (32) und Strahlungsdetektor (30) als starre Baueinheit ausgebildet sind, die um eine erste, parallel zur Verschieberichtung der Aufnahmeplatte (20) liegende Achse (X-X) verschwenkbar ist.

12. Strahlungsmeßgerät nach Anspruch 6 und 11, dadurch gekennzeichnet, daß außerhalb der ersten Achse (X-X) ein Federelement (33) an dieser Baueinheit (30,31,32) angreift und ein Druckmoment erzeugt, durch das der Führungsblock (13) mit definierter Vertikalkraft in die Führungsnut (12) gedrückt wird.

13. Strahlungsmeßgerät nach Anspruch 11, dadurch gekennzeichnet, daß Eintrittsblende (31) mit Lichtleiter (32) um eine zweite, in der Längsachse des Strahlungsdetektors (30) liegende Achse (Y-Y) verschwenkbar ist.

14. Strahlungsmeßgerät nach Anspruch 11, dadurch gekennzeichnet, daß oberhalb der Eintrittsblende (31) eine Injektionsvorrichtung (40) gehalten ist, über die in der Meßposition eine chemische Substanz durch die Eintrittsblende (31), die Blendenbohrung (13A), des Führungsblocks (13) und eines der Löcher der Lochreihe (11) der Blendenplatte (10) in ein Probengefäß (21) injizierbar ist.

15. Strahlungsmeßgerät nach Anspruch 11, dadurch gekennzeichnet, daß oberhalb der Eintrittsblende (31) eine Injektionsvorrichtung (41) gehalten ist, über die eine chemische Substanz durch ein Loch der zweiten Lochreihe (14) in ein Probengefäß (21) injizierbar ist.

## Claims

1. Radiation meter, particularly for luminescence metering, comprising a radiation detector (30), sample containers, which are designed in a sample tray (23) as recesses which are arranged matrix-like, shutter devices (10,31) with a shutter plate (10) which is kept stationary, with at least one shutter hole, which in order to allow through the radiation of a defined sample container for evaluation by the radiation detector (30), is held stationary between the radiation detector (30) and the sample tray (23), and displacement devices for the successive assignment, by means of horizontal displacement, of one of the sample containers respectively to the radiation detector (30) in such a way that, in the metering position of a sample container, this sample container, a shutter hole (11) of the shutter plate (10) and a further shutter hole (31) are arranged coaxially to one another in such a way that the radiation emitted exclusively from this sample container is supplied to the radiation detector,
characterised in that
as a further shutter hole (31), the entry shutter of the radiation detector (30) is installed on the shutter plate (10) in a light-impermeable manner,
in that the sample plate (23) is held in a receiving plate (20),
in that an elastic insert (22), for example made of foam material is inserted between the sample plate (23) and the receiving plate (20) and
in that the spacing (H) is set in such a way between the base of the receiving tray (20) and the lower side of the shutter plate (10) that the elastic insert (22) is pressed together and a pressing force of the sample tray (23) onto the underside of a shutter plate (10) forming a contact surface so that, in the metering position of each sample container, the latter is adjacent to the shutter tray (10) in a light-impermeable manner.

2. Radiation meter according to Claim 1,
characterised in that
the shutter plate (10) has several shutter holes forming at least one row of holes (11), over which holes the entry opening (31) of the detector (30) can be displaced in a sliding manner with the aid of guiding elements on the upper side of the shutter plate (10).

3. Radiation meter according to Claims 1-2,
characterised in that
the displacement of the sample containers (21) results only in one coordinate (x) and the displacement of the entry shutter (31) of the detector (30) results above a row of holes (11), which is arranged perpendicular for this purpose in the other coordinate (y).

4. Radiation meter according to Claim 1,
characterised in that
the front side (10A) of the shutter plate (10) facing towards the displacement direction (A) of the receiving plate (20) has a ramp-like chamfer (10B) by means of which the elastic insert (22) which is arranged in the supplied receiving plate (20) is pressed together.

5. Radiation meter according to Claims 2 and 3,
characterised in that
the guiding elements are formed on the upper side of the stationary shutter plate (10) by a guiding groove (12) extending over the row of holes (11).

6. Radiation meter according to Claim 5,
characterised in that
a guiding block (13) with a shutter boring (13A) is arranged in the guiding groove (12) to be movable in a sliding manner, said guiding block surrounding, for its part, the entry shutter (31) of the detector in a light-impermeable manner.

7. Radiation meter according to Claim 6,
characterised in that
the guiding block (13) has its length (L) chosen such that it closes off at least the two adjacent holes in the row of holes (11) when in its metering position, its shutter boring (13A) is situated coaxially to one hole of the row of holes (11).

8. Radiation meter according to Claim 3,
characterised in that
a further second row of holes (14) is arranged parallel to the row of holes (11), said second row of holes releasing the openings of the adjacent row of sample containers (21).

9. Radiation meter according to Claims 5 and 6,
characterised in that
the shutter tray (10) projects above the receiving tray (20) in the direction of the guiding groove (12) and at least one hole of the row of holes (11) and/or of the second row of holes (14) is situated there.

10. Radiation meter according to Claim 1,
characterised in that
the entry shutter (31) is connected to the entrance of the radiation detector (30), especially of a photomultiplier via a light guide arrangement (32) which rotates the light impulses to be tested by roughly 90° to the horizontally situated radiation detector (30).

11. Radiation meter according to Claims 3 and 10,
characterised in that
the entry shutter (31), the light guide (32) and the radiation detector (30) are designed as a rigid constructional unit which can be swivelled around a first axis (X-X), lying parallel to the direction of movement of the receiving tray (20).

12. Radiation meter according to Claims 6 and 11,
characterised in that
a spring element (33) engages onto this constructional unit (30,31,32) outwith the first axis (X-X) and produces a moment of pressure by means of which the guiding block (13) is pushed into the guiding groove (12) with a defined vertical force.

13. Radiation meter according to Claim 11,
characterised in that
the entry shutter (31) with the light guide (32) can be swivelled around a second axis (Y-Y) situated in the longitudinal axis of the radiation detector (30).

14. Radiation meter according to Claim 11,
characterised in that
above the entry shutter (31) there is held an injection device (40), via which, in the metering position, a chemical substance can be injected through the entry shutter (31), the shutter boring (13A) of the guiding block (13) and one of the holes of the row of holes (11) in the shutter plate (10) into a sample container.

15. Radiation meter according to Claim 11,
characterised in that
there is an injection device (41) above the entry shutter (31), via which device a chemical substance can be injected through a hole of the second row of holes (14) into a sample container (21).

## Revendications

1. Appareil de mesure de rayonnement, en particulier pour mesures de luminescence, constitué d'un détecteur de rayonnement (30), de récipients à échantillons qui sont formés de creux disposés en matrice faits dans une plaque à échantillons (23), de dispositifs diaphragmes (10, 31) comportant une plaque diaphragme montée fixe (10) qui a au moins un trou de diaphragme et est montée fixe entre le détecteur de rayonnement (30) et la plaque à échantillons (23) pour le passage du rayonnement d'un récipient à échantillon déterminé pour l'évaluation par le détecteur de rayonnement, et de dispositifs de déplacement pour l'association successive, par déplacement horizontal de la plaque à échantillons (23), chaque fois d'un des récipients à échantillons au détecteur de rayonnement (30) de façon telle que dans la position de mesure d'un récipient à échantillon, celui-ci, un trou de diaphragme (11) de la plaque diaphragme (10) et un autre trou de diaphragme (31) soient placés coaxialement, de façon telle que seul le rayonnement sortant de ce récipient à échantillon soit conduit au détecteur de rayonnement, caractérisé par le fait que comme autre trou de diaphragme (31), le diaphragme d'entrée du détecteur de rayonnement (30) est monté de manière étanche à la lumière sur la plaque diaphragme (10), que la plaque à échantillons (23) est montée dans une plaque support (20), qu'entre la plaque à échantillons (23) et la plaque support (20) est placée une garniture élastique (22) par exemple en matière alvéolaire, et que la distance (H) entre le fond de la plaque de montage (20) et le dessous de la plaque diaphragme (10) est réglée de sorte que la garniture élastique (22) soit comprimée et produise une pression de serrage de la plaque à échantillons (23) contre le dessous de la plaque diaphragme (10), qui forme une surface de butée, afin que chaque récipient à échantillon, en position de mesure, s'appuie de manière étanche à la lumière contre la plaque diaphragme (10).

2. Appareil de mesure de rayonnement selon la revendication 1, caractérisé par le fait que la plaque diaphragme (10) présente plusieurs trous de diaphragme qui forment au moins une rangée de trous (11) et par-dessus lesquels l'ouverture d'entrée (31) du détecteur (30) peut être déplacée par glissement à l'aide d'éléments de guidage prévus sur le dessus de la plaque diaphragme (10).

3. Appareil de mesure de rayonnement selon les revendications 1 et 2, caractérisé par le fait que le déplacement des récipients à échantillons (21) se fait seulement suivant une coordonnée (x) et le déplacement du diaphragme d'entrée (31) du détecteur (30) se fait par-dessus une rangée de trous (11) perpendiculaire à celle-ci, suivant l'autre coordonnée (y).

4. Appareil de mesure de rayonnement selon la revendication 1, caractérisé par le fait que le côté frontal (10A) de la plaque diaphragme (10) dirigé à l'opposé de la direction de déplacement (A) de la plaque support (20) présente un biseau du genre rampe (10B) au moyen duquel la garniture élastique (22) placée dans la plaque support (20) amenée est comprimée.

5. Appareil de mesure de rayonnement selon les revendications 2 et 3, caractérisé par le fait que les éléments de guidage prévus sur le dessus de la plaque diaphragme fixe (10) sont formés par une rainure de guidage (12) qui s'étend sur la rangée de trous (11).

6. Appareil de mesure de rayonnement selon la revendication 5, caractérisé par le fait que dans la rainure de guidage (12) est monté coulissant un bloc de guidage (13) qui est pourvu d'un trou de diaphragme (13A) et entoure de manière étanche à la lumière le diaphragme d'entrée (31) du détecteur (30).

7. Appareil de mesure de rayonnement selon la revendication 6, caractérisé par le fait que la longueur (L) du bloc de guidage (13) est choisie de façon que celui-ci obture au moins les deux trous voisins de la rangée de trous (11) lorsque dans la position de mesure son trou de diaphragme (13A) est coaxial avec un trou de la rangée de trous (11).

8. Appareil de mesure de rayonnement selon la revendication 3, caractérisé par le fait que parallèlement à la rangée de trous (11) est placée une deuxième rangée de trous (14) qui dégage les orifices de la rangée voisine de récipients à échantillons (21).

9. Appareil de mesure de rayonnement selon les revendications 5 et 6, caractérisé par le fait que la plaque diaphragme (10) dépasse de la plaque support (20) en direction de la rainure de guidage (12), et qu'à cet endroit se trouve au moins un trou de la rangée de trous (11) et/ou de la deuxième rangée de trous (14).

10. Appareil de mesure de rayonnement selon la revendication 1, caractérisé par le fait que le diaphragme d'entrée (31) est relié à l'entrée du détecteur de rayonnement (30), en particulier d'un photomultiplicateur, par un dispositif à conduit de lumière (32) qui dévie d'environ 90° vers le détecteur de rayonnement (30) placé horizontalement les impulsions lumineuses à détecter.

11. Appareil de mesure de rayonnement selon les revendications 3 et 10, caractérisé par le fait que le diaphragme d'entrée (31), le conduit de lumière (32) et le détecteur de rayonnement (30) forment un ensemble rigide qui peut basculer autour d'un premier axe (X-X) parallèle à la direction de déplacement de la plaque support (20).

12. Appareil de mesure de rayonnement selon les revendications 6 et 11, caractérisé par le fait qu'à l'extérieur du premier axe (X-X), un élément élastique (33) attaque l'ensemble (30, 31, 32) et produit un moment de pression qui presse le bloc de guidage (13) dans la rainure de guidage (12) avec une force verticale définie.

13. Appareil de mesure de rayonnement selon la revendication 11, caractérisé par le fait que le diaphragme d'entrée (31) peut basculer avec le conduit de lumière (32) autour d'un deuxième axe (Y-Y) qui coïncide avec l'axe longitudinal du détecteur de rayonnement (30).

14. Appareil de mesure de rayonnement selon la revendication 11, caractérisé par le fait qu'au-dessus du diaphragme d'entrée (31) est monté un dispositif d'injection (40) par lequel, dans la position de mesure, une substance chimique peut être injectée dans un récipient à échantillon (21) par le diaphragme d'entrée (31), le trou de diaphragme (13A) du bloc de guidage (13) et un des trous de la rangée de trous (11) de la plaque diaphragme (10).

15. Appareil de mesure de rayonnement selon la revendication 11, caractérisé par le fait qu'au-dessus du diaphragme d'entrée (31) est monté un dispositif d'injection (41) par lequel une substance chimique peut être injectée dans un récipient à échantillon (21) par un trou de la deuxième rangée de trous (14).
